# EUROPEAN PATENT SPECIFICATION

(11) **EP 0 950 637 B1**
(45) Date of publication and mention of the grant of the patent: **25.08.2004**
(21) Application number: 99106434.6
(22) Date of filing: 29.03.1999
(51) Int. Cl.: C01B 3/38, F02C 1/00, C01B 3/02

(54) **Process and unit for the combined production of ammonia synthesis gas and power**
Verfahren und Vorrichtung zur kombinierten Herstellung von Ammoniak-Synthesegas und Leistung
Procédé et dispositif de production combinée de gaz de synthèse pour l'obtention d'ammoniac et de puissance

(30) Priority: 16.04.1998 US 81926 P
(43) Date of publication of application: 20.10.1999
(73) Proprietor: Haldor Topsoe A/S, 2800 Lyngby (DK)
(72) Inventor: Andersen, Hanrik Solgaard, 2860 Soborg (DK)
(74) Representative: Grünecker, Kinkeldey, Stockmair & Schwanhäusser Anwaltssozietät

(56) References cited:
- WO-A-97/48639
- GB-A- 2 139 644
- US-A- 4 079 017
- A. NIELSEN (ED.): "Ammonia - Catalysis and Manufacture" 1995 , SPRINGER VERLAG , BERLIN XP002129765 216480 * page 204 - page 209 *

## Description

The present invention relates to the production of synthesis gas and power by primary and secondary steam reforming of a hydrocarbon feedstock, wherein part of the synthesis gas being withdrawn from the secondary steam reforming at high pressure is expanded in a gas turbine for the production of power and the expanded synthesis gas is utilized as fuel in the primary steam reforming step.

Preparation of synthesis gas by a sequence of primary and secondary steam reforming of a hydrocarbon feed stock is a well-known process in the art. The process is conventionally performed in a sequence of a fired tubular steam reformer and an adiabatic combustion reactor with a top combustion zone and a bottom catalyst zone. In the combustion zone hydrocarbon feedstock is partially oxidised with air or oxygen containing atmosphere. Partially oxidised effluent from the combustion zone is subsequently subjected to steam reforming in presence of a steam reforming catalyst arranged in fixed bed manner in the bottom part of the reactor. Typical operation conditions in the adiabatic reformer are 850°C and 2-4 MPa at steam to carbon ratios above 1, depending on the desired product gas.

A problem with adiabatic steam reforming is formation of soot in the substoichiometric combustion of hydrocarbons. In particular, at low steam/carbon ratios in the feed gas to the adiabatic reformer, soot is formed markedly in the combustion zone.

In a number of industrial applications a low steam to carbon ratio is required in the feed gas. Thus, in the manufacture of hydrogen and carbon monoxide synthesis gas steam to carbon ratios below 1 are advantageous to obtain the optimum hydrogen to carbon monoxide ratio in the product gas.

Several attempts to reduce soot formation at low steam to carbon ratios in adiabatic reforming have been made in the past, including specific burner designs and control of operation conditions.

In co-pending European Patent Application No 99102386, a process for soot free adiabatic catalytic steam reforming is described, wherein formation of soot is avoided by controlling the operation pressure within a certain range depending on the adiabatic gas temperature of the reformed feed stock and the steam to carbon ratio.

It was, furthermore, found that operation pressures above 3.5 MPa allow soot free reforming at a very low steam to carbon ratio.

Crawford et al. describe in US patent No. 4,079,017 a process with a primary and a secondary reformer operating in an economical way by partially by-passing the primary reformer and using a feed/effluent heat exchanger. No mention of low steam/carbon ratios is disclosed.

A process for synthesis gas production from light hydrocarbons is shown by Agee et al. in PCT application WO 97/48639. This relates to an economic production of synthesis gas by pressurising the air to the adiabatic reformer in a compressor driven by a turbine in which all the reformer effluent is expanded. The turbine produces no surplus power.

In GB-A-2139644 Gent discloses a process comprising synthesis gas production for methanol formation. It shows a partial oxidation process of a hydrocarbon feed, addition of additional feed and a subsequent catalytic reforming followed by expansion of all the effluent in a turbine driving a compressor. After withdrawal of the methanol product, the remaining gas is used in a feed/effluent heat exchanger.

A disadvantage of operating at high operation pressure in the adiabatic steam reforming process are expenses for compression of the feed gas. The pressure of produced synthesis gas will be typically required at a lower pressure for applications in subsequent process units.

It has now been found that substantial amounts of energy used in the compression of feed gas to an autothermal reformer is regained when depressurising a part of produced synthesis gas being withdrawn from the reformer at high pressure in a gas turbine for the generations of power and utilising the expanded portion of the gas as fuel in a fired tubular steam reformer.

Accordingly, this invention provides a process for the combined production of synthesis gas and power, comprising steps of primary and secondary steam reforming of a hydrocarbon feedstock, wherein part of the synthesis gas being withdrawn from the secondary steam reforming at high pressure is expanded in a gas turbine for the production of power and the expanded synthesis gas is utilized as fuel in the primary steam reforming step.

### Detailed Description of the Invention

In a specific embodiment of the invention is process gas of a hydrocarbon feedstock and steam in a first step steam reformed in a tubular steam reformer. The steam reformer contains a fixed bed of conventional steam reforming catalyst being externally heated by burning fuel in burners.

As an essential feature of the invention fuel used in the heating of the steam reforming catalyst is a part stream of synthesis gas prepared by the process as further described below.

From the catalyst bed a primary steam reformed stream is withdrawn and introduced into a secondary reformer together with a stream of oxidant. In secondary reformer the primary steam reformed stream is further steam reformed by the known secondary steam reforming process. Conditions and catalyst employed in secondary reformer are conventionally and summarized in the table below. From secondary reformer steam reformed ammonia synthesis gas is withdrawn and distributed partly to a product line, and the remainder of stream is passed to a gas turbine, where the gas is expanded to produce rotational shaft power. Expanded synthesis gas from the gas turbine is then burned in the burners to provide heat in primary reformer.

Process conditions and composition of the different gas streams in the above process are summarized in the table below.

**Table**

| Stream No. | 1 | 2 | 3 | 4 | 5 |
|---|---|---|---|---|---|
| Flow, Nm³/h | 208,184 | 257,176 | 65,133 | 344,258 | 68,852 |
| Pressure, Kg/cm² | 39.5 | 36 | 37 | 35.5 | 1.5 |
| Temperature, °C | 635 | 809 | 550 | 973 | 454 |

| Composition, mole % | | | | | |
|---|---|---|---|---|---|
| H₂ | 13.60 | 39.46 | - | 37.42 | 37.42 |
| N₂ | 2.01 | 1.10 | 77.61 | 15.51 | 15.51 |
| O₂ | - | - | 20.88 | - | - |
| H₂O | 47.95 | 39.45 | 0.55 | 31.96 | 31.96 |
| CH₄ | 30.95 | 7.46 | - | 0.41 | 0.41 |
| C₂ | - | - | - | - | - |
| CO | 0.15 | 6.18 | - | 9.43 | 9.43 |
| CO₂ | 5.31 | 6.33 | 0.03 | 5.09 | 5.09 |
| Ar | 0.03 | 0.02 | 0.90 | 0.18 | 0.18 |
| Gas turbine power: 15.8 MW. | | | | | |

As apparent from the above Table 15.8 MW power are produced by the above process when expanding about 20% by volume of produced synthesis gas in a gas turbine.

## Claims

1. Process for the combined production of synthesis gas and power, comprising steps of primary and secondary steam reforming of a hydrocarbon feedstock, wherein part of the synthesis gas being withdrawn from the secondary steam reforming at high pressure is expanded in a gas turbine for the production of power **characterised in that** part of the expanded synthesis gas is utilised as fuel in the primary steam reforming step.

2. Process unit for the combined production of synthesis gas and power, comprising a fuel heated primary steam reformer connected to a secondary steam reformer; and
a gas turbine connected to an outlet line of the secondary steam reformer for expansion of at least part of the produced synthesis gas withdrawn through the outlet line of the secondary steam reformer, **characterised in**
a line for passing part of the expanded synthesis gas to burner means arranged in the primary steam reforming reactor.

## Patentansprüche

1. Verfahren zur kombinierten Herstellung von Synthesegas und Energie, umfassend
Schritte von primärem und sekundärem Steam Reforming von einem Kohlenwasserstoff- Ausgangsmaterial, worin
ein Teil des Synthesegases vom sekundärem Steam Reforming unter hohem Druck zurückgezogen wird und in eine Gasturbine zur Herstellung von Energie expandiert wird, charakterisiert dadurch,
dass ein Teil des expandierten Synthesegases als Brennmaterial in dem primären Steam Reforming-Schritt verwendet wird.

2. Eine Verfahrenseinheit für die kombinierte Herstellung von Synthesegas mit Energie, umfassend
einen primären Steam Reformer, der mit Brennstoff erhitzt wird, verknüpft an einen sekundären Steam Reformer; und
eine Gasturbine verknüpft mit einer Auslassleitung des sekundären Steam Reformers zur Expansion von zumindest einem Teil des hergestellten Synthesegases zurückgezogen durch die Auslassleitung des sekundären Steam Reformers, charakterisiert durch
eine Leitung zum Passieren eines Teils des expandierten Synthesegases zu Brennermitteln angeordnet in dem primären Steam Reforming- Reaktor.

## Revendications

1. Procédé de production combinée de gaz de synthèse et d'énergie, comprenant des étapes de reformage primaire et secondaire à la vapeur d'une charge d'alimentation hydrocarbonée, dans lequel une partie du gaz de synthèse qui est retiré du reformage secondaire à la vapeur à haute pression est dilatée dans une turbine à gaz pour la production d'énergie, **caractérisé en ce qu'**une partie du gaz de synthèse dilaté est utilisée en tant que carburant dans l'étape de reformage primaire à la vapeur.

2. Dispositif de procédé pour la production combinée de gaz de synthèse et d'énergie, comprenant un reformeur primaire à la vapeur chauffé par un carburant relié à un reformeur secondaire à la vapeur ; et
une turbine à gaz reliée à une ligne de sortie du reformeur secondaire à la vapeur pour une dilatation d'au moins une partie du gaz de synthèse produit retiré par la ligne de sortie du reformeur secondaire à la vapeur, **caractérisé** en
une ligne destinée à faire passer une partie du gaz de synthèse dilatée vers des moyens de brûleur agencés dans le réacteur de reformage primaire à la vapeur.
